# EUROPÄISCHE PATENTANMELDUNG

(11) **EP 2 322 872 A1**
(43) Veröffentlichungstag der Anmeldung: **18.05.2011**
(21) Anmeldenummer: 09405198.4
(22) Anmeldetag: 13.11.2009
(51) Int. Cl.: F24J 2/52, H01L 31/042

(54) **Vorrichtung für die Montage von Solarmodulen**

(71) Anmelder: Reich + Nievergelt AG, 8002 Zürich (CH)
(72) Erfinder: Folta, Enrico, 06295 Eisleben OT Sittichenbach (DE)
(74) Vertreter: Clerc, Natalia

(57) **Zusammenfassung**

Es wird eine Vorrichtung für die Montage von Solarmodulen auf einer Dachoberfläche, insbesondere auf einer Flachdachoberfläche, angegeben. Die Vorrichtung weist einen Sockel (10) zur Auflage auf einer Dachoberfläche auf sowie zumindest ein Verbindungselement (20), welches einerseits mit einem Solarmodul und andererseits mit einer am Sockel (10) angeformten Verbindungsstruktur (14a, 14b) verbindbar ist. Der Sockel (10) bildet bei Auflage auf einer Dachoberfläche einen befüllbaren Behälter mit einem Innenraum (13).

## Beschreibung

### TECHNISCHES GEBIET

Die vorliegende Erfindung betrifft eine Vorrichtung für die Montage von Solarmodulen gemäss Oberbegriff des Patentanspruchs 1.

### STAND DER TECHNIK

Seit längerem ist die Montage von Solarzellen- bzw. Photovoltaiksystemen auf Hausdächern bekannt, um insbesondere der Sonne zugewandte Flächen von Dächern zur Energiegewinnung zu nutzen. Dabei wird die Energie des Sonnenlichts in einer an sich bekannten Art und Weise mittels Solarzellen in elektrische Energie umgewandelt. Die elektrische Energie kann dadurch umweltfreundlich, unabhängig vom öffentlichen Versorgungsnetz und kostengünstig hergestellt werden.

Die Solarzellen werden normalerweise als Solarmodule, welche jeweils im Wesentlichen aus dem Solarlaminat mit den Solarzellen und einem Rahmen bestehen, in dem das Solarlaminat gehalten ist, auf einem Hausdach oder an einer Fassade installiert. Die Montage der Solarmodule auf einem Dach kann auf unterschiedlichste Art und Weise vorgenommen werden, wobei die Montageart abhängig von der Dachart ist. Dabei kann es sich insbesondere um ein Flach- oder ein Schrägdach handeln. In jedem Falle ist es jedoch vorteilhaft, wenn die Solarmodule derart montiert werden, dass sie eine Neigung haben, welche in Bezug zur Sonneneinstrahlsrichtung optimal ist. Die Solarmodule werden deshalb normalerweise unter einem gewissen Winkel zur Oberfläche eines Flachdaches installiert. Um diesen Winkel herzustellen, ist eine spezielle Halterung bzw. Montagevorrichtung notwendig.

Bezüglich dieser Montagevorrichtung stellen insbesondere Witterungseinflüsse eine grosse Herausforderung dar. Die Solarmodule und deren Montagevorrichtungen müssen einen grossen Temperaturbereich tolerieren können und auch zum Beispiel starken Wind, hohe Schneelasten oder Hagel aushalten. Dazu werden die Montagevorrichtungen üblicherweise fest mit einem Element des Hausdaches verbunden, indem sie beispielsweise auf das Dach aufgeschraubt oder gar einbetoniert werden. Dies erfordert jedoch aufwändige Installationsarbeiten. Dabei ist insbesondere bei Flachdächern von Bedeutung, dass bei einer derartigen Montage die Dachhaut nicht durchbrochen bzw. beschädigt wird, was zu einer Undichtigkeit des Daches führen würde. Durch die Verwendung von Ortsbeton kann deshalb beispielsweise ein Betonsockel hergestellt werden, welcher auf der Dachoberfläche aufliegt und welcher dann zur weiteren Montage von Befestigungselementen eines Solarmoduls dient.

In DE 203 12 641 ist ein u-förmiges Flachdach-Montagegestell aus Beton offenbart, das auf einfache Art und Weise auf ein Flachdach aufgelegt werden kann, wobei ein Verrutschen auf dem Dach aufgrund von zum Beispiel starkem Wind durch das verhältnismässig hohe Eigengewicht des Montagesgestells verhindert wird. Es sind also keine aufwändigen Arbeiten zum Verbinden des Montagegestells mit dem Dach notwendig. Das hohe Gewicht des Montagegestells erschwert jedoch dessen Handhabung vor und während der Installation erheblich. Der Transport und die Platzierung des Montagegestells auf dem Dach erfordern entsprechend ausgebildete Baumaschinen, was die Installation wiederum verteuert. Durch die spezielle Form des Montagegestells weisen die Solarzellen einen gewissen Neigungswinkel zum Dach auf, welcher jedoch vorbestimmt und nicht veränderbar ist.

Um den Neigungswinkel des Solarmoduls zum Dach bei der Installation frei einstellen zu können, werden im Stand der Technik verschiedene Lösungen angegeben. So beschreibt die DE 10 2005 012 054 eine Halterung mit einer drehbaren zweiteiligen Stütze, wobei die beiden Teile der Stütze gegeneinander verschwenkbar sind. Die DE 10 20005 012 055 und die DE 103 04 361 zeigen jeweils Halterungen, welche über ein Kugelgelenk verfügen, um einen beliebigen Winkel des Solarmoduls zur Dachoberfläche herzustellen. Diese Halterungen sind jedoch jeweils einzeln am Dach oder an einem Betonsockel befestigt, was die Installation der Vorrichtung aufwändig macht.

### DARSTELLUNG DER ERFINDUNG

Es ist eine Aufgabe der vorliegenden Erfindung, eine Vorrichtung für die Montage von Solarmodulen anzugeben, mit der Solarmodule auf möglichst einfache Art und Weise auf einem Flachdach installierbar sind.

Diese Aufgabe wird durch eine Vorrichtung mit den Merkmalen des Anspruchs 1 gelöst. Weitere Ausführungsformen sind in den abhängigen Ansprüchen angegeben.

Die vorliegende Erfindung stellt also eine Vorrichtung für die Montage von Solarmodulen zu Verfügung, welche die folgenden Merkmale aufweist:
einen Sockel zur Auflage auf einer Dachoberfläche, insbesondere einer Flachdachoberfläche; und
zumindest ein Verbindungselement, welches einerseits mit einem Solarmodul und andererseits mit einer am Sockel angeformten Verbindungsstruktur verbindbar ist. Dabei bildet der Sockel bei Auflage auf einer Dachoberfläche einen befüllbaren Behälter mit einem Innenraum.

Dadurch, dass der Sockel einen befüllbaren Behälter bildet, ist es möglich, den Sockel vorteilhaft so auszubilden, dass er im Vergleich zu Sockeln aus dem Stand der Technik in seinem leeren Zustand insgesamt ein sehr geringes Eigengewicht aufweist und trotzdem ohne Befestigungsmittel annähernd unverschiebbar auf der Dachfläche aufliegt. Der Sockel und somit die gesamte Vorrichtung wird dadurch besser handhabbar, was die Installation auf einem Hausdach in wesentlichem Masse vereinfacht und vergünstigt. Der verhältnismässig leichte Sockel kann dann also bevorzugt ohne Zuhilfenahme von Baumaschinen auf ein Flachdach gebracht werden, wo der Sockel wie gewünscht platziert wird. Ein Verrutschen der Vorrichtung beispielsweise aufgrund von Wind oder sonstigen Witterungseinflüssen kann nach erfolgter Platzierung des Sockels vorteilhaft dadurch verhindert werden, dass der Innenraum des Sockels mit Material zum Beschweren des Sockels, beispielsweise einem Schüttgut wie Kies, Sand oder Steine, aufgefüllt wird. Das Eigengewicht des nun gefüllten Sockels ist genügend gross, um den Sockel in seiner Lage auf dem Dach zu halten. Die Installation ist somit dank dieser Ausgestaltung der Vorrichtung sehr einfach ausführbar, ohne dass ein Risiko besteht, dabei das Dach oder die Dachhaut zu beschädigen.

Der gefüllte Sockel bildet somit eine Basis für die Montage eines Solarmoduls, welche keine weiteren Befestigungsmittel zur Befestigung auf dem Dach benötigt.

Um das Material zum Beschweren der Vorrichtung, also beispielsweise Schüttgut, auf einfache Art und Weise in den Sockel einfüllen zu können, ist der Behälter vorteilhaft nach oben hin offen. Auch das Entnehmen des Materials, falls die Vorrichtung zu einem späteren Zeitpunkt beispielsweise verschoben, repariert oder modifiziert werden muss, ist dadurch vereinfacht.

Bevorzugt ist der Innenraum des Sockels durch einen zumindest auf seiner Aussenseite eben ausgebildeten Boden und eine den Boden umlaufende Seitenwand begrenzt. Aufgrund des ebenen Bodens ist der Sockel stabil auf eine Dachoberfläche auflegbar. Die umlaufende Seitenwand verhindert ein Heraustreten des im Innenraum gelagerten Materials, welches zum Beschweren der Vorrichtung dient.

Vorteilhaft ist im Innenraum zumindest eine Stützstruktur ausgebildet, welche unterschiedliche Bereiche der Seitenwand miteinander verbindet. Die grossen Kräfte, welche insbesondere auf die Seitenwand durch das im Innenraum gelagerte Material ausgeübt werden, können durch diese Stützstruktur aufgenommen werden. Eine verhältnismässig leichte Bauweise des Sockels kann dadurch trotzdem erzielt werden.

Bevorzugt ist die Verbindungsstruktur im Innenraum des Sockels angeordnet. Dies erhöht die Stabilität der gesamten Vorrichtung, da die Auflagefläche des Sockels dadurch eine beliebige Grösse aufweisen kann. Insbesondere vorteilhaft ist eine Ausgestaltung, bei der die Verbindungsstruktur innerhalb einer Seitenwand des Sockels angeordnet ist. Die Verbindungsstruktur kann dabei an einem Boden des Sockels angebracht sein und sich insbesondere von diesem nach oben hin erstrecken. Bevorzugt erstreckt sich die Verbindungsstruktur dabei vom Boden aus weiter nach oben hin als die Seitenwand des Sockels.

Vorteilhaft ist insbesondere eine Ausgestaltung, bei welcher der Sockel ein Eigengewicht aufweist, welches es einem Menschen erlaubt, den Sockel ausschliesslich mittels seiner Muskelkraft bequem zu tragen. Die Handhabung der Vorrichtung beim Transport und bei der Installation auf einem Hausdach ist dadurch deutlich erleichtert im Vergleich zu Vorrichtungen aus dem Stand der Technik.

Die Verbindungsstruktur kann insbesondere die Form eines Domes haben. Dies erlaubt es, das Verbindungselement so zu konstruieren und mit der Verbindungsstruktur zu verbinden, dass das Verbindungselement beliebig schwenkbar am Sockel angebracht ist. Das Solarmodul kann dadurch sehr flexibel, insbesondere was den Neigungswinkel des Solarmoduls zur Dachoberfläche betrifft, auf dem Dach installiert werden. Insbesondere kann der Neigungswinkel dadurch erst bei der Installation des Solarmoduls auf dem Dach eingestellt werden, was ein grosser Vorteil der Vorrichtung darstellt.

Von Vorteil ist es insbesondere, wenn das mit der Verbindungsstruktur verbundene Verbindungselement in jede Raumrichtung relativ zur Verbindungsstruktur schwenkbar ist.

Bevorzugt weist das Verbindungselement zwei im Wesentlichen kalottenförmige Spannelemente auf, zwischen denen die Verbindungsstruktur des Sockels einklemmbar ist. Mittels einer derartigen Verbindung zwischen dem Verbindungselement und dem Sockel kann das Verbindungselement schwenkbar am Sockel angebracht werden. Eine derartige Ausgestaltung des Verbindungselementes ist grundsätzlich auch in Kombination mit anderen Sockeln oder mit Befestigungselementen, die an einer Dachoberfläche angebracht sind, verwendbar, solange diese eine entsprechende komplementäre Verbindungsstruktur aufweisen.

Vorzugsweise ist die Vorrichtung derart ausgebildet, dass das Verbindungselement eine Verbindungsstange aufweist, an welcher die Spannelemente angebracht sind, und dass die Verbindungsstruktur eine Öffnung aufweist, durch welche die Verbindungsstange hindurchragt. Die Verbindungsstange kann zum direkten Verbinden mit einem Solarmodul dienen, wobei sie dazu vorgängig beispielsweise in ihrer Länge angepasst werden kann. Zum Verbinden mit dem Solarmodul kann die Verbindungsstange eine Befestigungsstruktur, zum Beispiel in Form eines Aussengewindes aufweisen.

Bevorzugt weist die Verbindungsstange einen Aussendurchmesser auf und die Öffnung einen Innendurchmesser, wobei der Aussendurchmesser der Verbindungsstange deutlich kleiner ist als der Innendurchmesser der Öffnung. Die Verbindungsstange hat dann also, wenn sie durch die Öffnung hindurchragt, ein gewisses seitliches Spiel, wodurch sie relativ zur Verbindungsstruktur in einem gewissen Bereich schwenkbar ist.

Um die beiden Spannelemente gegenüber der Verbindungsstruktur zu verspannen und dadurch in ihrer Lage relativ zur Verbindungsstruktur zu fixieren, kann die Verbindungsstange vorteilhaft ein Aussengwinde aufweisen, auf welches eine Befestigungsmutter aufschraubbar ist. Bei dem Aussengewinde kann es sich insbesondere um dasselbe Gewinde handeln, welches zur Verbindung des Verbindungselementes mit dem Solarmodul dient.

Vorteilhaft erstreckt sich das Aussengewinde über die gesamte Länge der Verbindungsstange. Die Verbindungsstange kann dadurch in ihrer Länge, beispielsweise durch Absägen, einfach angepasst werden, um das Solarmodul mit einer bestimmten Neigung zur Dachoberfläche zu installieren. Die Verbindungsstange weist dann bei einer veränderten Länge z.B. in beiden Endbereichen auf jeden Fall immer noch ein Gewinde auf, um eine Verbindung mit dem Solarmodul bzw. den Spannelementen herzustellen.

Bevorzugt ist der Sockel aus Kunststoff hergestellt. Der Sockel hat dadurch ein geringes Eigengewicht. Die Verbindungselemente sind vorzugsweise aus Metall, insbesondere aus Edelstahl gefertigt.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Draufsicht auf einen Sockel einer erfindungsgemässen Vorrichtung für die Montage von Solarmodulen gemäss einer ersten Ausführungsform;
- Fig. 2: eine Ansicht einer Kurzseite des Sockels der Fig. 1;
- Fig. 3: eine Ansicht einer Längsseite des Sockels der Fig. 1;
- Fig. 4: eine Schnittansicht des Sockels entlang der Linie IV-IV in Fig. 1;
- Fig. 5: eine Schnittansicht des Sockels entlang der Linie V-V in Fig. 1;
- Fig. 6: eine Schnittansicht des Sockels entlang der Linie VI-VI in Fig. 1;
- Fig. 7: eine Schnittansicht des Sockels entlang der Linie VII-VII in Fig. 1;
- Fig. 8: eine Ansicht einer Kurzseite des Sockels der Fig. 1 mit daran angebrachten Verbindungselementen;
- Fig. 9: eine Ansicht einer Längsseite des Sockels der Fig. 1 mit daran angebrachten Verbindungselementen;
- Fig. 10: eine Schnittansicht des Sockels entlang der Linie IV-IV in Fig. 1 mit daran angebrachten Verbindungselementen; sowie
- Fig. 11: eine Schnittansicht des Sockels entlang der Linie VI-VI in Fig. 1 mit daran angebrachten Verbindungselementen.

### BESCHREIBUNG BEVORZUGTER AUSFÜHRUNGSFORMEN

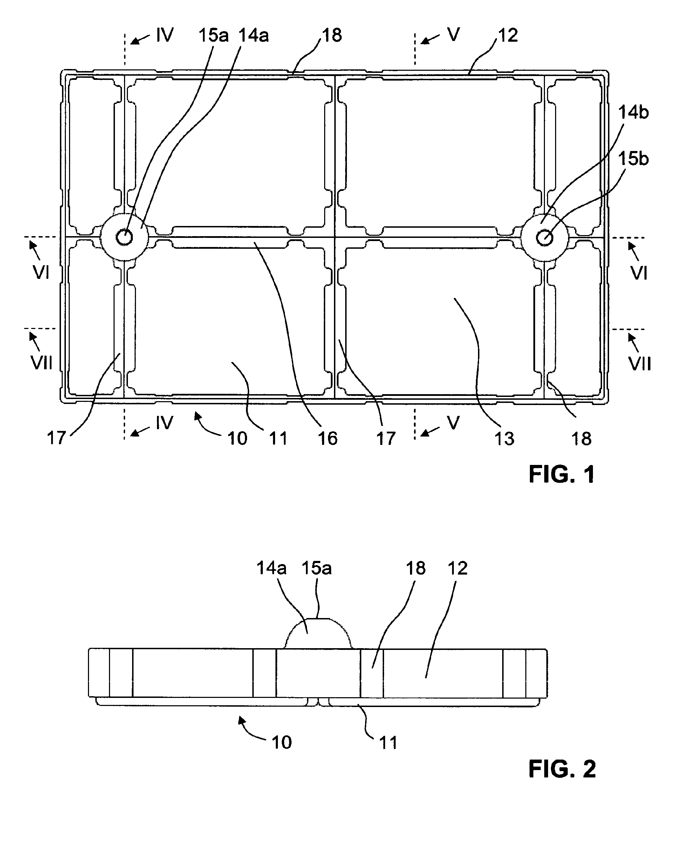

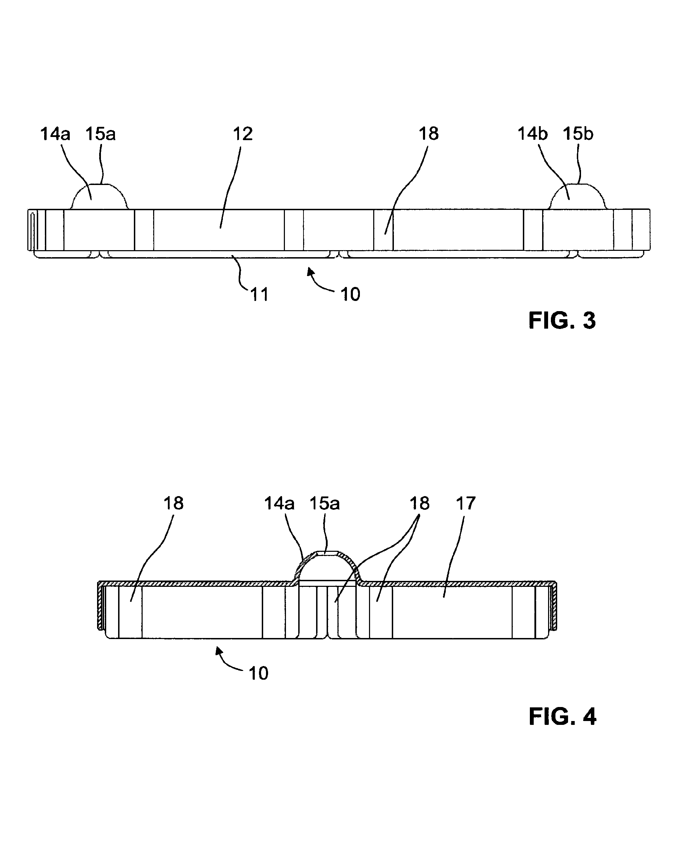

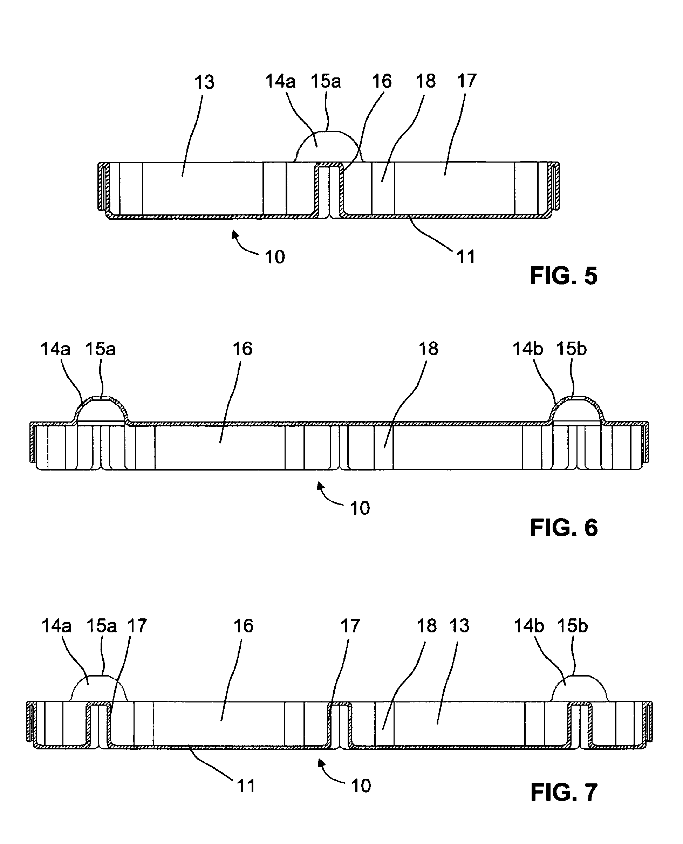

Die Figuren 1 bis 11 zeigen eine bevorzugte Ausführungsform einer erfindungsgemässen Vorrichtung für die Montage von Solarmodulen auf einer Dachoberfläche. Die Solarmodule selber sind in den Zeichnungen nicht dargestellt.

Ein Sockel 10 einer erfindungsgemässen Montagevorrichtung ist insbesondere in den Figuren 1 bis 7 in verschiedenen Ansichten gezeigt. Der Sockel 10 bildet eine Basis für die Montage eines Solarmoduls, welches im Wesentlichen aus einem Solarlaminat mit Solarzellen und einem Rahmen besteht, in dem das Solarlaminat gehalten ist. Der Sockel 10, welcher ein Montagegestell bildet, ist gemäss dieser Ausführungsform als Ganzes einstückig aus einem verhältnismässig leichten und wetterfesten Material, vorzugsweise aus einem Kunststoff wie zum Beispiel Polyethylen (PE), hergestellt. Polyethylen eignet sich insbesondere deshalb sehr gut, weil ein damit hergestellter Sockel 10 sehr gut recyclebar ist. Der gesamte Sockel 10 ist dabei insbesondere aus einer ursprünglich ebenen Platte durch Formpressen auf einfache und kostengünstige Art und Weise herstellbar. Aufgrund seines niedrigen Gewichtes kann der Sockel 10 ohne weiteres von einem Bauarbeiter ausschliesslich durch seine eigene Muskelkraft zum vorgesehenen Montageort auf ein Hausdach gebracht und dort wie gewünscht platziert werden.

Wie aus Figur 1 ersichtlich ist, weist der Sockel 10 dieser Ausführungsform einen Boden 11 auf, der hier eine geschlossene, im Wesentlichen rechteckige, eben ausgebildete Bodenfläche bildet, die mit ihrer Aussenseite bzw. Unterseite direkt auf der Dachoberfläche (nicht dargestellt) aufliegt. In einer alternativen Ausführungsform könnte der Boden aber auch Öffnungen aufweisen. Der Boden könnte auf seiner Innenseite und/oder auf seiner Aussenseite nicht eben, sondern beispielsweise gewellt ausgebildet sein. Des Weiteren könnte der Boden anstelle einer rechteckigen eine runde oder andersartige Form haben. Der Sockel ist vorzugsweise quaderförmig ausgebildet. Er könnte jedoch auch eine andere Form aufweisen.

Entlang des äusseren Randes des Bodens 11 erstreckt sich eine umlaufende, in sich geschlossene Seitenwand 12 mit jeweils zwei gegenüberliegenden Längs- und Kurzseiten senkrecht nach oben hin. Der Sockel 10 bildet insgesamt einen nach oben hin offenen Behälter mit einem Innenraum 13, welcher durch den Boden 11 und die Seitenwand 12 begrenzt ist. Im Vergleich zur Länge einer ihrer Kurzseiten ist die Seitenwand 12 an jeder Stelle jeweils wesentlich schmaler ausgebildet. Der Sockel 10 eignet sich insbesondere zur Aufnahme eines Materials, welches zum Beschweren des Sockels 10 auf der Dachoberfläche dient. Dazu kann insbesondere Schüttgut, wie Kies oder Steine verwendet werden, welches in den Innenraum 13 des Behälters eingefüllt wird. Auch ein Beschweren des Sockels 10 mit grösseren Steinen, Backsteinen oder Betonelementen, welche in den Behälter eingelegt werden, ist denkbar. Bei der Installation der Solarmodule auf einem Dach wird somit der Sockel 10 auf das Dach gebracht und platziert und dann beispielsweise mit Kies aufgefüllt, um ein Verschieben der Vorrichtung auf der Dachoberfläche durch Witterungseinflüsse wie Wind zu verhindern.

Der Sockel 10 weist wenigstens eine, hier zwei Verbindungsstrukturen 14a und 14b auf, welche sich bei dieser Ausführungsform im Innenraum 13 vom Boden 11 nach oben hin erstrecken. Die beiden identisch ausgebildeten Verbindungsstrukturen 14a und 14b sind dabei beide mittig in Bezug zur kürzeren Ausdehnungsrichtung des rechteckigen Bodens 11 angeordnet und befinden sich jeweils in der Nähe von zwei gegenüberliegenden Kurzseiten der Seitenwand 12. Die Verbindungsstrukturen 14a, 14b weisen hier jeweils die kuppelartige Form eines Domes auf. Dabei überragen die Verbindungsstrukturen 14 a und 14b die Seitenwand 12 nach oben hin deutlich. An ihrem oberen Ende ist in den domartigen Verbindungsstrukturen 14a, 14b jeweils eine zentrale, kreisrunde Öffnung 15a bzw. 15b ausgebildet.

Am Sockel 10 sind eines oder mehrere Solarmodule installierbar. Diese Installation kann insbesondere und vorteilhaft derart erfolgen, dass jeweils ein Sockel 10 zur Halterung von jeweils einem Solarmodul dient. Bevorzugt weist der Sockel 10 eine Höhe von ca. 130 mm, eine Breite von ca. 800 mm und eine Tiefe von ca. 1300 bis ca. 1500 mm auf. Ein solcher Sockel dieser bevorzugten Ausführungsform hat ein Leergewicht von ca. 25 kg.

Das Solarmodul kann über nur eine Verbindungsstruktur oder bevorzugt über mehrere Verbindungsstrukturen, insbesondere bevorzugt über genau zwei Verbindungsstrukturen 14a und 14b, mit dem Sockel 10 verbunden sein.

Es ist aber auch denkbar, dass ein einzelnes Solarmodul an mehreren Verbindungsstrukturen von jeweils unterschiedlichen Sockeln 10 befestigt ist. Genauso ist es umgekehrt aber auch möglich, dass ein Sockel 10 eine Vielzahl von Verbindungsstrukturen aufweist und zur Halterung von mehreren Solarmodulen dient.

Im Innenraum 13 des Sockels 10 sind Stützstrukturen in Form von Verstärkungsrippen, hier Längsrippen 16 und Querrippen 17, vorgesehen, welche zur Verstärkung des Sockels 10 dienen, insbesondere im Bereich der Verbindungsstrukturen 14a und 14b. Die Längsrippen 16 und die Querrippen 17 erstrecken sich vorzugsweise vom Boden 11 ebenso weit in senkrechter Richtung nach oben hin wie die Seitenwand 12. Während die Längsrippen 16 parallel zu den Längsseiten der Seitenwand 12 und dem rechteckigen Boden 11 verlaufen, sind die Querrippen 17 parallel zu den Kurzseiten der Seitenwand 12 angeordnet. Die Längsrippen 16 verbinden dabei jeweils die Kurzseiten der Seitenwand 12 mit den Verbindungsstrukturen 14a und 14b sowie die Verbindungsstrukturen 14a und 14b miteinander. Ebenso verbinden die Querrippen 17 jeweils die Verbindungsstrukturen 14a und 14b mit den Längsseiten der Seitenwand 12. Zusätzlich ist eine durch die Mitte des Bodens 11 verlaufende Querrippe 17 ausgebildet, welche die Längsrippe 16 kreuzt. Die im Innenraum 13 angeordneten Stützstrukturen können aber auch anders ausgebildet und angeordnet sein. So ist beispielsweise auch eine sternförmige Anordnung der Verstärkungsrippen oder die Anordnung von Diagonalrippen möglich.

Die Längsrippen 16 und die Querrippen 17 teilen den Innenraum 13 des Sockels 10 dadurch in mehrere, unterschiedlich grosse, rechteckige Teilräume ein, welche jeweils nach oben hin offen sind und beispielsweise mit Kies oder Steinen auffüllbar sind, um den Sockel 10 zu beschweren.

Die Seitenwand 12 sowie die Längsrippen 16 und die Querrippen 17 sind aufgrund der speziellen Herstellung des Sockels 10 mittels Formpressen jeweils doppelwandig ausgebildet und nach unten hin offen. Durch das Vorsehen von einer Vielzahl von Versteifungen 18 in der Seitenwand 12, den Längsrippen 16 und den Querrippen 17 ist die strukturelle Stabilität des Sockels 10 zusätzlich erhöht. Die Versteifungen werden jeweils dadurch erreicht, dass die beiden gegenüberliegenden Wände in einem gewissen Bereich miteinander verschweisst werden. Ein Auseinanderbiegen der beiden gegenüberliegenden Wände wird dadurch verhindert.

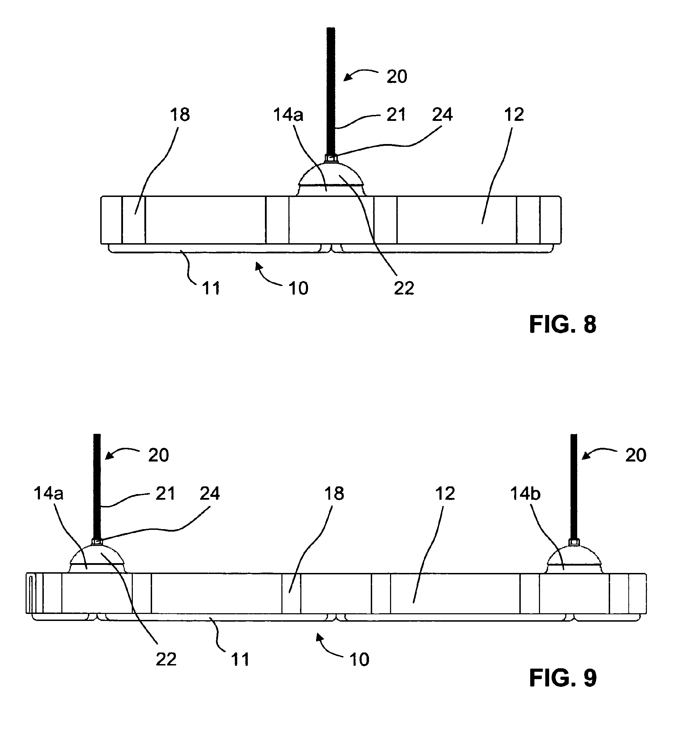

Am Sockel 10 angebrachte Verbindungselemente 20 sind in den Figuren 8 bis 11 gezeigt. Diese sind vorzugsweise aus Metall, insbesondere aus Edelstahl gefertigt. Das Verbindungselement 20 weist eine Verbindungsstange 21 auf, welche an ihrem oberen Ende mit einem (in den Figuren nicht gezeigten) Solarmodul verbindbar ist. Am unteren Ende der Verbindungsstange 21 sind zwei kalottenförmige Spannelemente 22 und 23 angebracht, welche jeweils nach unten hin offen sind. Während das äussere Spannelement 22 bei dieser Ausführungsform verschiebbar entlang der Verbindungsstange 21 angebracht ist, ist das innere Spannelement 23 fest am unteren Ende der Verbindungsstange 21 fixiert. Das innere Spannelement 23 weist optimalerweise einen äusseren Radius auf, der ungefähr dem inneren Radius der domförmigen Verbindungsstruktur 14a, 14b entspricht. Der Radius des äusseren Spannelementes 22 entspricht idealerweise in etwa dem äusseren Radius der domförmigen Verbindungsstruktur 14a bzw. 14b.

Zumindest im Bereich ihres unteren Endes weist die Verbindungstange 21 ein Aussengewinde auf, welches zum Aufschrauben einer Befestigungsmutter 24 dient. Durch das Vorhandensein der aufgeschraubten Befestigungsmutter 24 ist der Bewegungsspielraum des äusseren Spannelementes 22 entlang der Verbindungsstange 21 nach oben hin einschränkbar.

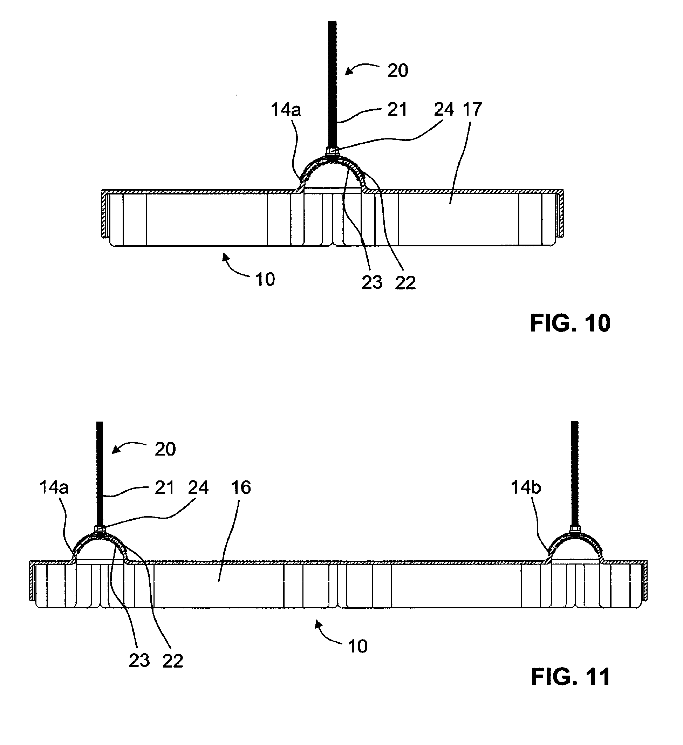

Das Verbindungselement 20 ist am Sockel 10 befestigbar, indem die Verbindungsstange 21 von unten her durch eine Öffnung 15a bzw. 15b der Verbindungsstruktur 14a bzw. 14b hindurchgeschoben wird, wobei das äussere Spannelement 22 dazu von der Verbindungsstange 21 abgenommen wird. Die Öffnung 15a bzw. 15b der Verbindungsstruktur 14a bzw. 14b ist dabei derart dimensioniert, dass die Verbindungsstange 21 des Verbindungselementes 20 nicht nur bequem von unten her durch diese durchschiebbar ist, sondern dass die Verbindungsstange 21 dabei auch noch ein gewisses, nicht vernachlässigbares seitliches Spiel hat. Bei vollständig in die Öffnung 15a bzw. 15b eingeschobener Verbindungsstange 21 liegt das innere Spannelement 23 von unten her an eine domartig gewölbte Wand der Verbindungsstruktur 14a bzw. 14b an. Das Verbindungselement 20 wird anschliessend durch Anbringen des äusseren Spannelementes 22 an der Verbindungsstange 21 und Fixieren dieses Spannelementes 22 durch die Befestigungsmutter 24 am Sockel 10 befestigt. Die beiden Spannelemente 22 und 23 klemmen dabei die domförmige Wand der Verbindungsstruktur 14a, 14b zwischen sich ein, wie dies beispielsweise in Figur 11 gezeigt ist. Im Falle, dass die Befestigungsmutter 24 nur locker am Aussengewinde angezogen wird, ist das Verbindungselement 20 dabei in jede Raumrichtung aufgrund des bereits erwähnten Spiels der Verbindungsstange 21 in der Öffnung 15a, 15b um einen bestimmten Winkelbereich schwenkbar. Der Winkelbereich ist dabei abhängig vom Durchmesser der Verbindungsstange 21 in Bezug auf den Innendurchmesser der Öffnung 15a bzw. 15b. Ausgehend von einer Anfangsposition, bei der die Verbindungsstange 12 senkrecht zum Boden 11 des Sockels 10 steht, ist das Verbindungselement 20 bei dieser Ausführungsform in jede Raumrichtung relativ zur Verbindungsstruktur 14a, 14b schwenkbar.

Diese Montage der Verbindungselemente 20 am Sockel 10 geschieht vorteilhaft bereits bevor die Vorrichtung auf einem Dach platziert und zum Beschweren mit einem Schüttgut aufgefüllt wird. Die Verbindungselemente 20 sind bei der Installation der Solarmodule auf dem Hausdach bevorzugt also bereits am Sockel 10 vorinstalliert, wobei die Befestigungsmutter 24 dann vorteilhaft nur locker angezogen ist, wodurch das Verbindungselement 20 auf einfache Weise relativ zum Sockel 10 schwenkbar ist.

Um einen beliebigen Neigungswinkel des Solarmoduls zur Dachoberfläche herstellen zu können, wird die Verbindungsstange 21 bei der Montage in ihrer Länge entsprechend angepasst, was beispielsweise durch Absägen eines oberen Bereiches der Verbindungsstange 21 erreicht werden kann. Das Solarmodul wird dann beispielsweise über zwei Verbindungselemente 20 mit jeweils unterschiedlich langen Verbindungsstangen 21 mit dem Sockel 10 verbunden, wodurch das Solarmodul in Bezug zum Sockel 10 und somit zur Dachoberfläche geneigt ist. Um eine möglichst einfache und stabile Verbindung des Solarmoduls mit den Verbindungselementen 20 zu erreichen, werden diese dann vor dem Festziehen der Befestigungsmutter 24 derart gegenüber der Verbindungsstruktur 14a, 14b verschwenkt, dass die Verbindungsstange 21 ungefähr in die Richtung der Oberflächennormalen des Solarmoduls gerichtet ist.

Die Verbindung der Verbindungsstange 21 mit dem Solarmodul kann dann auf beliebige Art und Weise gemäss dem bekannten Stand der Technik erfolgen. Die Verbindungsstange 21 kann dazu an ihrem oberen Ende ein Aussengewinde aufweisen, welches zur Verbindung mit dem Solarmodul beispielsweise mittels einer Mutter dient. Die Verbindungsstange 21 kann insbesondere derart ausgebildet sein, dass sich das Aussengewinde über die gesamte Länge der Verbindungsstange 21 erstreckt. Das Aussengewinde dient dann einerseits dazu, am oberen Ende der Verbindungsstange 21 das Verbindungselement 20 mit dem Solarmodul zum verbinden, und andererseits, das äussere Spannelement 22 mittels der Mutter 24 zu fixieren. Bei der Verbindungsstange 21 handelt es sich in diesem Fall um eine Gewindestange. Das Ausbilden der Verbindungsstange 21 als eine Gewindestange ist deshalb vorteilhaft, weil ein Gewinde auf jeden Fall auch dann am oberen Ende der Verbindungsstange 21 vorhanden ist, wenn diese zum Beispiel durch Absägen in ihrer Länge angepasst wird.

Die Erfindung ist selbstverständlich nicht auf das vorstehende Ausführungsbeispiel beschränkt, und eine Vielzahl von Abwandlungen ist möglich. So können insbesondere die Verbindungsstrukturen 14a, 14b und die Verbindungselemente 20 auf eine beliebige andere Art und Weise entsprechend dem bekannten Stand der Technik ausgestaltet sein. Der Sockel kann beliebig viele Verbindungsstrukturen aufweisen. Es ist also ein Sockel denkbar mit nur einer Verbindungsstruktur oder mit einer Vielzahl von Verbindungsstrukturen, also auch deutlich mehr als die zwei des Ausführungsbeispiels. Die Neigung des Solarmoduls kann beispielsweise mittels Abstandselementen oder einem zusätzlichen Verbindungsgestell bewerkstelligt sein. Auch Kugelgelenke können verwendet werden, um die Verbindungsstange schwenkbar mit dem Sockel zu verbinden. Selbstverständlich ist es auch denkbar, dass das Solarmodul parallel zur Dachoberfläche installiert wird. Dabei kann das Solarmodul beispielsweise einfach direkt auf den Sockel 10 aufgeschraubt oder in schienenartige Halterungen des Sockels eingeschoben werden. Beliebige Halterungen aus dem Stand der Technik sind grundsätzlich denkbar, um das Solarmodul am Sockel zu befestigen. Eine Vielzahl von Abwandlungen ist auch in Bezug auf den Sockel möglich. So können der Boden und/oder die Seitenwand des Sockels geschlossen sein oder auch eine Mehrzahl von Durchbrechungen oder Öffnungen aufweisen, um ein Abfliessen von Regenwasser zu gewährleisten. Als Material zum Beschweren könnte alternativ auch Wasser dienen, wobei der Sockel dann einen tankartigen Behälter bilden könnte. Auch ist es denkbar, dass der Boden und/oder die umlaufende Seitenwand des Sockels eine rost- oder gitterartige Struktur aufweist, welche das Material zum Beschweren des Sockels in dessen Innenraum zurückhält. Eine Vielzahl weiterer Abwandlungen ist möglich.

### BEZUGSZEICHENLISTE

| | | | |
|---|---|---|---|
| 10 | Sockel | 17 | Querrippe |
| 11 | Boden | 18 | Versteifung |
| 12 | Seitenwand | 20 | Verbindungselement |
| 13 | Innenraum | 21 | Verbindungsstange |
| 14a, 14b | Verbindungsstruktur | 22 | Äusseres Spannelement |
| 15a, 15b | Öffnung | 23 | Inneres Spannelement |
| 16 | Längsrippe | 24 | Befestigungsmutter |

## Patentansprüche

1. Vorrichtung für die Montage von Solarmodulen aufweisend
einen Sockel (10) zur Auflage auf einer Dachoberfläche, insbesondere einer Flachdachoberfläche, und
zumindest ein Verbindungselement (20), welches einerseits mit einem Solarmodul und andererseits mit einer am Sockel (10) angeformten Verbindungsstruktur (14a, 14b) verbindbar ist,
**dadurch gekennzeichnet, dass**
der Sockel (10) einen bei der Auflage auf der Dachoberfläche befüllbaren Behälter mit einem Innenraum (13) bildet.

2. Vorrichtung gemäss Anspruch 1, wobei der Behälter (10) nach oben hin offen ist.

3. Vorrichtung gemäss einem der Ansprüche 1 oder 2, wobei der Innenraum (13) des Sockels (10) durch einen ebenen Boden (11) und eine den Boden (11) umlaufende Seitenwand (12) begrenzt ist.

4. Vorrichtung gemäss Anspruch 3, wobei im Innenraum (13) zumindest eine Stützstruktur (16, 17) ausgebildet ist, welche unterschiedliche Bereiche der Seitenwand (12) miteinander verbindet.

5. Vorrichtung gemäss einem der vorhergehenden Ansprüche, wobei die Verbindungsstruktur (14a, 14b) im Innenraum (13) des Sockels (10) angeordnet ist.

6. Vorrichtung gemäss einem der vorhergehenden Ansprüche, wobei der Sockel (10) ein Eigengewicht aufweist, welches es einem Menschen erlaubt, den Sockel (10) ausschliesslich mittels seiner Muskelkraft bequem zu tragen.

7. Vorrichtung gemäss einem der vorhergehenden Ansprüche, wobei die Verbindungsstruktur (14a, 14b) die Form eines Domes hat.

8. Vorrichtung gemäss einem der vorhergehenden Ansprüche, wobei das mit der Verbindungsstruktur (14a, 14b) verbundene Verbindungselement (20) in jede Raumrichtung relativ zur Verbindungsstruktur (14a, 14b) schwenkbar ist.

9. Vorrichtung gemäss einem der vorhergehenden Ansprüche, wobei das Verbindungselement (20) zwei im Wesentlichen kalottenförmige Spannelemente (22, 23) aufweist, zwischen denen die Verbindungsstruktur (14a, 14b) des Sockels (10) einklemmbar ist.

10. Vorrichtung gemäss Anspruch 9, wobei das Verbindungselement (20) eine Verbindungsstange (21) aufweist, an welcher die Spannelemente (22, 23) angebracht sind, und wobei die Verbindungsstruktur (14a, 14b) eine Öffnung (15a, 15b) aufweist, durch welche die Verbindungsstange (21) hindurchragt.

11. Vorrichtung gemäss Anspruch 10, wobei die Verbindungsstange (21) einen Aussendurchmesser aufweist und die Öffnung (15a, 15b) einen Innendurchmesser, und wobei der Aussendurchmesser der Verbindungsstange (21) deutlich kleiner ist als der Innendurchmesser der Öffnung (15a, 15b).

12. Vorrichtung gemäss einem der Ansprüche 10 oder 11, wobei die Verbindungsstange (21) ein Aussengwinde aufweist, auf welches eine Befestigungsmutter (24) aufschraubbar ist, um die beiden Spannelemente (22, 23) gegenüber der Verbindungsstruktur (14a, 14b) zu verspannen und **dadurch** in ihrer Lage relativ zur Verbindungsstruktur (14a, 14b) zu fixieren.

13. Vorrichtung gemäss Anspruch 12, wobei sich das Aussengewinde über die gesamte Länge der Verbindungsstange (21) erstreckt.

14. Vorrichtung gemäss einem der vorhergehenden Ansprüche, wobei der Sockel (10) aus Kunststoff hergestellt ist.
